(19) Europäisches Patentamt
European Patent Office
Office européen des brevets

(11) **EP 2 040 944 B1**

(12) **EUROPEAN PATENT SPECIFICATION**

(45) Date of publication and mention of the grant of the patent:
**02.06.2010 Bulletin 2010/22**

(21) Application number: **07766631.1**

(22) Date of filing: **16.07.2007**

(51) Int Cl.:
**B60G 17/018** (2006.01)    **B60G 17/0165** (2006.01)
**B60G 17/015** (2006.01)

(86) International application number:
**PCT/IB2007/002033**

(87) International publication number:
**WO 2008/010075 (24.01.2008 Gazette 2008/04)**

(54) **METHOD AND APPARATUS FOR CONTROLLING A SEMI -ACTIVE SUSPENSION**

VERFAHREN UND VORRICHTUNG ZUR STEUERUNG EINER SEMIAKTIVEN AUFHÄNGUNG

PROCÉDÉ ET APPAREIL DE COMMANDE D'UNE SUSPENSION SEMI-ACTIVE

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **19.07.2006   IT MI20061403**

(43) Date of publication of application:
**01.04.2009   Bulletin 2009/14**

(73) Proprietor: **Politecnico di Milano**
**20133 Milano (IT)**

(72) Inventors:
• **SAVARESI, Sergio, Matteo**
**I-26100 Cremona (IT)**
• **SPELTA, Cristiano**
**I-20052 Monza-Milano (IT)**

(74) Representative: **De Gregori, Antonella et al**
**Ing. Barzano' & Zanardo Milano S.p.A.**
**Via Borgonuovo 10**
**20121 Milano (IT)**

(56) References cited:
**EP-A- 0 566 091    DE-A1- 19 530 658**
**JP-A- 4 015 113    US-A- 5 322 320**

**Description**

The present invention relates to a method and apparatus for controlling a semi-active suspension in accordance, respectively, with the preamble of claim 1 and 14.

More in particular, the invention relates to a method and apparatus for controlling the dynamics of a controllable force generator in a semi-active suspension.

Semi-active suspensions have their application in various industrial fields, such as for example automotive, motorcycle industry, agricultural machinery, railway vehicles, household appliances and the like.

In the present description, the term of suspended mass refers to the chassis of a motor vehicle, whereas the term of non suspended mass refers to the wheels of a motor vehicle, that is, rim, tyre, braking system and part of the driving gears.

The union between suspended mass and non suspended mass is ensured by the suspension which consists of an elastic system and a damping element, also called shock absorber.

It is worth noting that such auto simplification also applies, with simple considerations, to any one of the industrial fields listed above.

As known, suspensions may be divided into the following types:

- passive: consisting of springs and shock absorbers whose parameters are selected in the design step by the manufacturer and cannot be changed; and
- semi-active: consisting of springs and shock absorbers whose damping coefficient value may be changed by a control system.

It should be noted that, irrespective of the type of suspension selected, the purpose of suspensions is to obtain the following objects:

- driving comfort: which is strictly related to the insulation of the vehicle and thus of the driver, from road irregularities;
- grip: which is strictly related to the contact force between tyre and asphalt.

It is important to note that comfort and grip objects are intrinsically in contrast with one another and it will therefore be necessary to make a compromise between the two.

In fact, as is well known to the man skilled in the art, a vehicle provided with a particularly "soft" suspension will be capable of deforming very quickly and therefore of absorbing any road irregularities, but on the other hand, it is subject to easily lose contact between wheel and asphalt reducing the vehicle grip, making it virtually undrivable.

On the other hand, a vehicle provided with a particularly "stiff" suspension will have excellent grip to the disadvantage of the insulation from the road, that is, to the detriment of driving comfort.

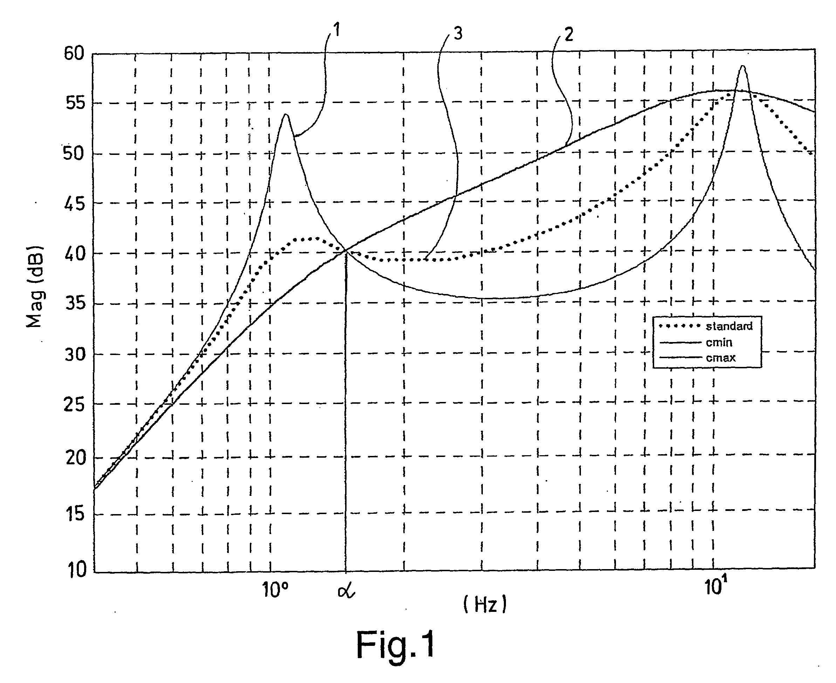

With reference to figure 1, wherein the acceleration spectrum of an element of a passive suspension is shown, for example of the suspended mass, a first profile 1 is noted, which corresponds to a particularly "soft" passive suspension or to a minimum damping coefficient $C_{min}$, a second profile 2, which corresponds to a particularly "stiff" passive suspension or to a maximum damping coefficient $c_{max}$, and a third profile 3, which corresponds to a compromise or standard passive suspension.

In particular, such third profile 3 is one of the possible compromise choices that are usually made by the manufacturers to ensure a suitable compromise between comfort and grip.

It is just to meet such need that semi-active suspensions have been developed, which use suitable control logics or methods, implemented by specific control apparatus, allow improving both the driving comfort and the grip at the same time, as compared to passive suspensions.

The main differences found between semi-active suspensions can be identified in the different control logics or in the different types of adjustable force generators (or shock absorbers) that can be used.

As regards the control logics or methods, they can be developed on the basis of a finite number of levels preselected by the manufacturer in the design step, for example two levels, such as an "on" level and an "off" level, or continuous.

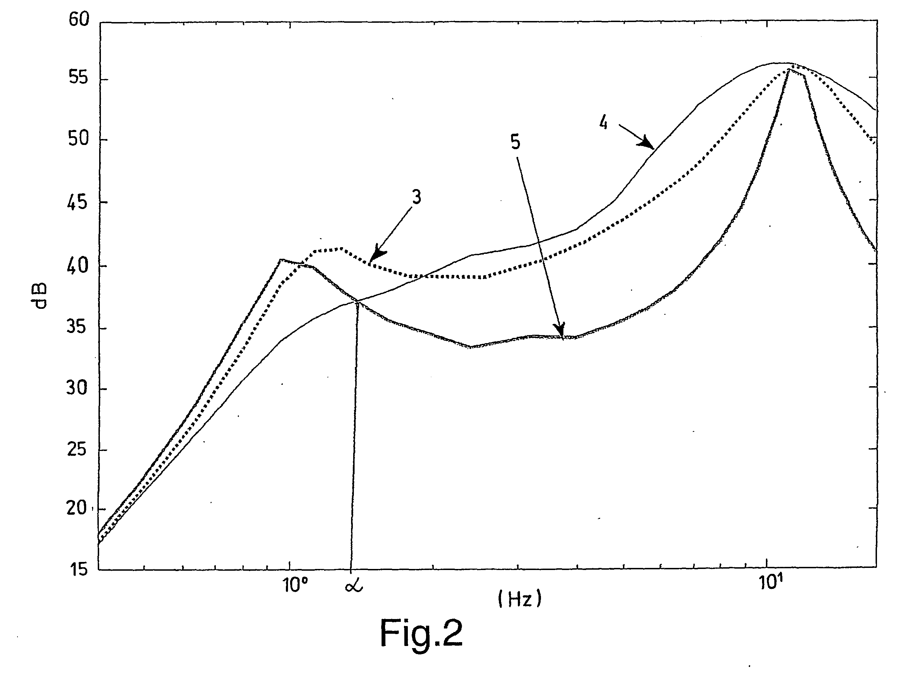

Figure 2 shows various typical profiles of the acceleration spectrum of an element of a suspension, such as the suspended mass, based on the control methods such as Sky-Hook, Acceleration-Driven-Damping (known in the prior art) and compared with profile 3, which as described above with reference to figure 1, corresponds to a passive suspension having a compromise damping coefficient.

In particular, in such figure 2, a profile 4 is noted which represents a two state control profile Sky-Hook (SH) , typically "on" and "off, and another profile 5 which represents another two state control method Acceleration-Driven-Damping (ADD).

Such control methods, Sky-Hook and/or Acceleration-Driven-Damping, in the substance envisage imposing, by suitable control systems, a control signal (for example a current piloted by a control unit) capable of varying the shock absorber damping coefficient, in particular between an "on" level and an "off" level.

It should be noted that the "on" level coincides with the damping coefficient $c_{max}$ and the "off" level coincides with the damping coefficient $c_{min}$ of the shock absorber. Such coefficients $c_{max}$ and $c_{min}$ are selected by the manufacturer in the design step of the suspension in relation to the type of vehicle the suspension itself is intended for.

As regards the different types of adjustable force generators (or shock absorbers), which have as a peculiar feature that of varying their damping coefficient according to the control signal, the following types may be distinguished:

- CDC (Continuously Damping Control) shock absorbers, whose operation is based on the variation of the size of the orifices connecting the top and bottom chamber of the shock absorber piston, that is, it is possible to change the speed at which the suspension returns to the balance position; and
- Rheological shock absorbers, whose operation envisages the use of rheological fluids, that is, fluids that exhibit a variable viscosity based on a suitable electrical and/or magnetic field (also called electro-rheological or magneto-rheological shock absorbers).

Several patent documents are known in the art, which describe the different control logics and/or apparatus capable of controlling the dynamics of a semi-active suspension, such as for example those listed below:

- US 6,904,344 entitled "Semi-Active Shock Absorber Control System";
- US 6,311,110 entitled "Adaptive Off-State Control Method";
- US 6,115,658 entitled "No-Jerk Semi-Active Skyhook Control Method and Apparatus";
- US 5,732,370 entitled "Method for Controlling Motion Using two-stage Adjustable Damper";
- US 5, 088, 760 entitled "Semi-Active Suspension Control System with Reduced Switching Frequency in Hard and Soft Suspension Characteristics"; and
- US 5, 062, 657 entitled "On/Off Semi-Active Suspension Control".

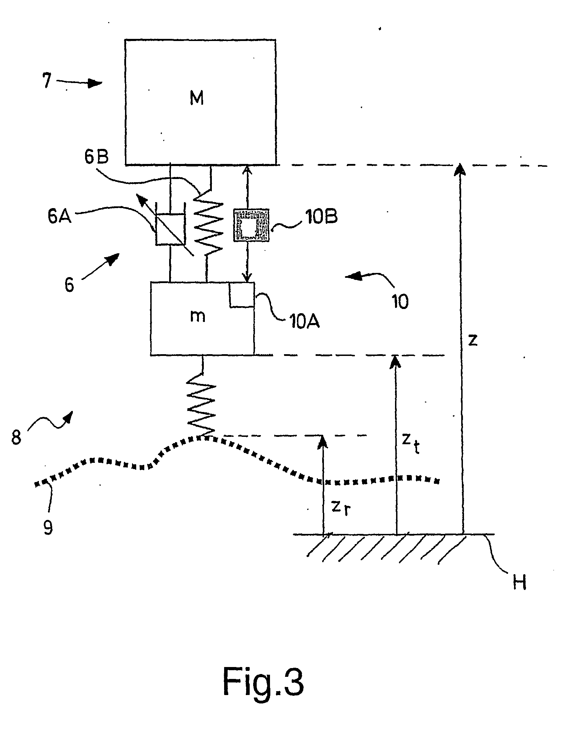

Such patent documents are based on a "simplified" analysis of the suspension dynamics, which from the conceptual point of view is shown in figure 3.

Figure 3 shows a so-called "quarter car view", that is, a partial and schematic view of the vehicle being simulated, wherein a controllable suspension system 6 is noted, capable of interconnecting the suspended mass 7 ("M") of a vehicle with non suspended mass 8 ("m") of such vehicle.

To this end, the controllable suspension 6 comprises a controllable force generator (or controllable shock absorber) 6A and a spring 6B capable of controlling the vertical dynamics of the non suspended mass 8, which in the representation in figure 3 is shown as running along the profile of a road 9.

From figure 3 it is also noted that the profile of road 9 leads the following movements to suspension 6:

- $z_r$ road profile 9 movement relative to a reference plane H;
- $z_t$ movement of the non suspended mass "m" of the vehicle relative to the reference plane H;
- $z$ movement of the suspended mass "M" of the vehicle relative to said reference plane H.

Among the patent documents listed above, documents US 6, 311, 110, US 6, 115, 658, US 5, 732, 370, US 5,088,760 and US 5,062, 657 have in common the measurement apparatus 10, also schematically shown in figure 3.

In particular, such measurement apparatus 10 comprises an acceleration sensor 10A mounted on the non suspended mass 8 and a linear potentiometer (also called strainmeter) 10B, arranged between such non suspended mass 8 and that constrained 7.

In patent document US 6,904,344, as an alternative to the linear potentiometer 10B, an acceleration sensor is provided arranged on the constrained mass (not shown in figure 3).

The control methods illustrated by the patent documents mentioned above may be divided into the following three groups:

1st group: patent documents US 6,311,110 and US 6,115,658 are intended for improving the critical aspects of the Sky-Hook control method. However, such methods strongly depend on the specific calibration procedures of the vehicle the suspension is mounted on.

2nd group: patent documents US 6,904,344, US 5, 732, 370 and US 5, 062, 657 found the control methods on a simplified calculation of the optimum force that the suspension should develop in particular conditions, such as reaching the travel end of the suspension, thus limiting their efficacy to particular events.

3rd group: patent document US 5,088,760 describes a control method based on a processing step of signals relating to a plurality of sensors seated on the suspension; however, the performance of detection of such sensors are limited only to a portion of the characteristic frequency band of the system.

In view of the prior art described above, the object of the present invention is to provide a method and an apparatus for controlling an adjustable force generator in a controllable suspension system which should be capable of solving the drawbacks found in the methods and apparatus made according to the prior art.

In accordance with the present invention, such object is achieved by a method for controlling a controllable force generator in a controllable suspension system, in accordance with claim 1.

Such object is also achieved by an apparatus for controlling a controllable force generator in a controllable suspension system, in accordance with claim 14.

Thanks to the present invention it is possible to obtain a control method that, after a step of processing suitable signals of measurement of the suspension dynamics, allows optimising the suspension response in a quick and efficient manner.

The inventive method allows the real exploitation of the capabilities of a semi-active suspension, optimising the performance thereof, ensuring better grip, height from the ground, reacting to the external forces, controlling roll, pitch and yaw, filtering noises of various types, in a more accurate and precise manner than in the prior art.

Finally, but not less important, the low complexity of the control apparatus makes the implementation of the inventive method particularly advantageous.

In fact, the control methods developed in accordance with the known techniques provide worse results with almost always higher computation complexity.

The features and advantages of the present invention will appear more clearly from the following detailed description of some practical embodiments thereof, made by way of a non-limiting example with reference to the annexed drawings, wherein:

- figure 1 shows typical profiles of the acceleration spectrum of a suspension element based on damping coefficient $c_{min}$, $c_{max}$ and $C_{standard,}$ in accordance with the prior art;
- figure 2 shows typical profiles of the acceleration spectrum of a suspension element based on control methods such as Sky-Hook, Acceleration-Driven-Damping, in accordance with the prior art;
- figure 3 shows a "quarter car" view in accordance with the prior art;
- figures 4 to 6 show a three possible embodiments of the method and apparatus according to the present invention;
- figure 7 shows the comparison between typical profiles of the acceleration spectrum of a suspension element and the profiles obtained by the use of the control method in accordance with the present invention.

In the following description, reference is made, for simplicity of description, to a semi-active suspension in relation to the specific field of the automotive industry, but it is clear that the following description also applies to semi-active suspensions intended for being implemented on motorcycles, agricultural machines, railway vehicles, household appliances and the like.

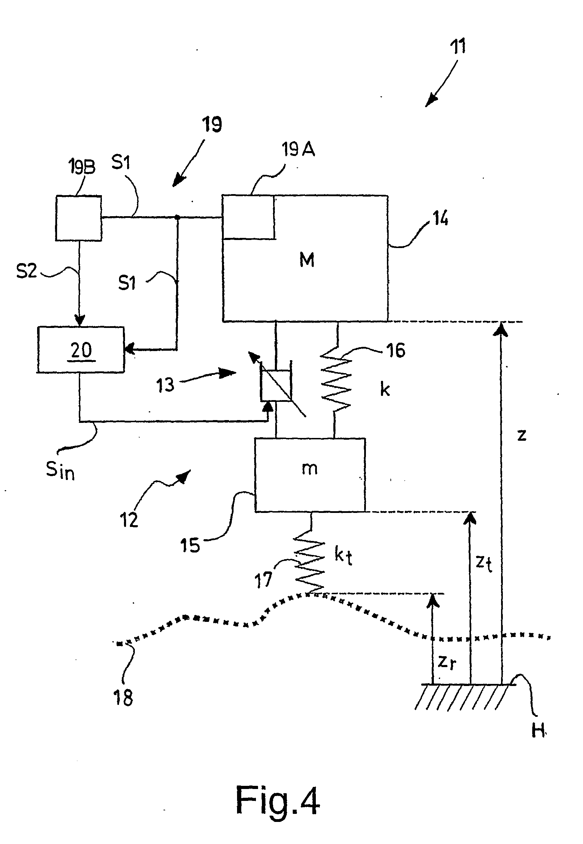

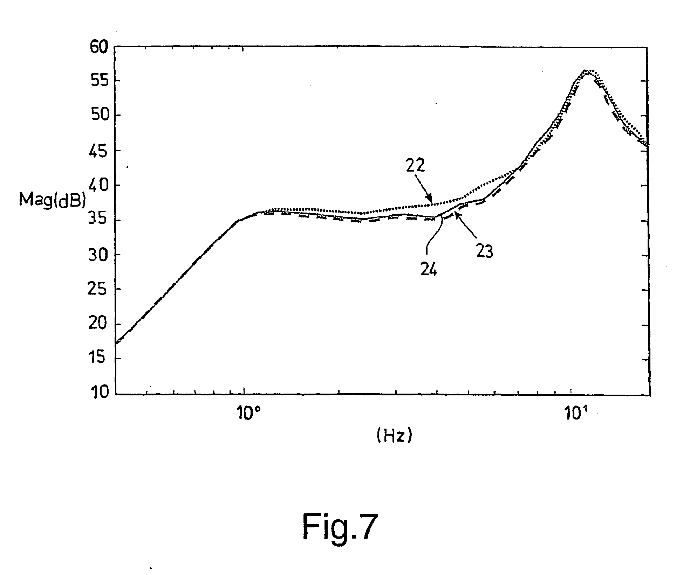

With reference to the annexed figures 4 to 7, reference numeral 11 denotes the apparatus for controlling a controllable force generator 13 in a controllable suspension system 12.

The controllable suspension system 12 is interconnected between a first element 14 and a second element 15.

Such controllable force generator 13 (or controllable shock absorber) in combination with a spring 16 with elastic constant $k$ is capable of controlling the vertical dynamics of the non suspended mass "m" of the vehicle (or wheel).

The non suspended mass "m" is identified with the second element 15 that in the present representation is depicted by a spring 17 with elastic constant $k_t$.

Figures 4-6 also show that the profile of road 18 leads the following movements to suspension 12:

- $z_r$ road profile 18 movement relative to a reference plane H;
- $z_t$ movement of the non suspended mass "m" of the vehicle relative to the reference plane H;
- $z$ movement of the suspended mass "M" of the vehicle relative to said reference plane H.

The control apparatus 11 comprises the following elements:

- first detection means 19 for detecting suitable physical quantities so as to generate a first S1 and a second signal S2 representative of said physical quantities;
- control means 20 suitable for receiving said first signal S1 and said second signal S2 for generating a control signal $S_{in}$ for controlling the dynamics of the damping of said controllable force generator 13.

The detection means 19 may for example detect physical quantities such as speed, acceleration and the like induced on suspension 12 when the vehicle (not shown in the annexed figures) covers the road profile 18.

In the embodiment shown in figure 4, the first signal S1 represents the acceleration that said first element 14 undergoes while the vehicle covers the profile of said road 18 and the second signal S2 represents the speed of said first element 14 while the vehicle covers the profile of said road 18.

In other words, signal S1 can be identified with the second derivative of the movement z of the suspended mass "M" while signal S2 can be identified with the first derivative of the movement z of the suspended mass "M" , that is:

- signal S1 can be identified with $\ddot{z}(t)$, that is, the second derivative of movement z;

- signal S2 can be identified with $\dot{z}(t)$, that is, the first derivative of movement z.

The first detection means 19, in the embodiment shown in figure 4, is an accelerometer 19A operatively associated to said first element 14, suitable for detecting the acceleration of said first element 14 and for generating said first signal S1 (that is, the second derivative of movement z, that is, $\ddot{z}(t)$) and an integration device 19B suitable for carrying out the operation of integration of said first signal S1 for obtaining signal S2 (that is, the first derivative of movement z, that is, $\dot{z}(t)$ ) representative of the speed of said first element 14.

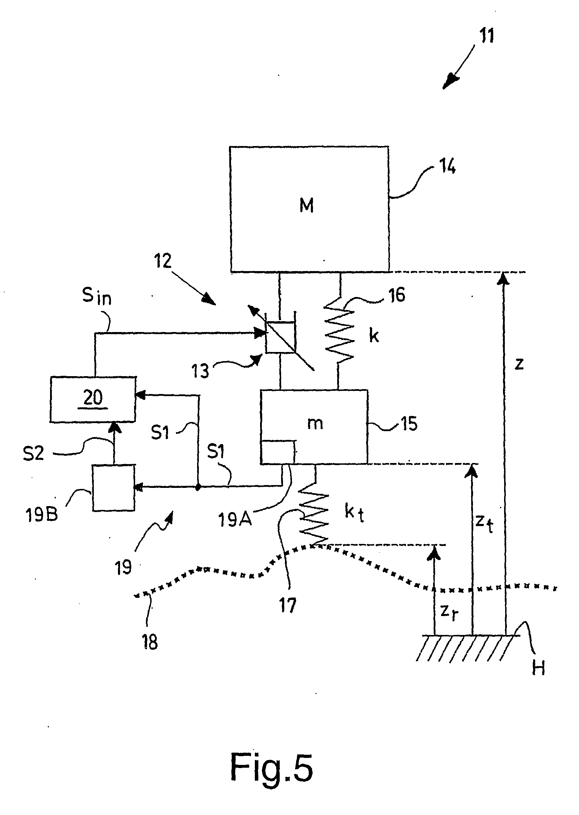

Similar remarks may be made with reference to the embodiment shown in figure 5, with the exception that accelerometer 19A is operatively associated to said second element 15.

In the embodiment shown in figure 5, accelerometer 19A is suitable for detecting the acceleration of said second element 15 for generating said signal S1.

With reference to the embodiments shown in figures 4 and 5, the control means 20 is adapted for generating, advantageously, said control signal $S_{in}$ which is a function of the ratio value between said first signal S1 squared and said second signal S2 squared so as to discriminate whether the elements of suspension 12 exhibit a high or low frequency behaviour.

More in particular, the control means 20 is suitable for generating said control signal $S_{in}$ as a function of a first damping law L1 when the relationship value between said first signal S1 squared and said second signal S2 squared is less than or equal to a predetermined constant, or said control means 20 is suitable for generating said control signal $S_{in}$ as a function of a second damping law L2 when the ratio value between said first signal S1 squared and said second signal S2 squared is more than said predetermined constant.

In other words, the control means 20 generates the control signal $S_{in}$ based on the following function:

$$f(t) = \ddot{z}(t)^2 - \alpha^2 \, \dot{z}(t)^2 \qquad [1]$$

$$\ddot{z}(t)^2 \Big/ \dot{z}(t)^2 < \alpha^2 \qquad [2]$$

$$\ddot{z}(t)^2 \Big/ \dot{z}(t)^2 > \alpha^2 \qquad [3]$$

where
$\ddot{z}(t)$ is the acceleration expressed in m/s² of said first element 14 of the controllable suspension 12 measured at time t;
$\dot{z}(t)$ is the speed expressed in m/s of said first element 14 of the controllable suspension 12 measured at time t;
$\alpha$ is the invariance frequency expressed in rad/sec, that is, the constant that represents the frequency suitable for discriminating the set of frequencies between high and low frequencies.

It is worth noting that $\alpha$ is a fixed parameter and is determined in advance during the design of the controllable suspension 12.

It is also worth noting that the damping laws identified above may be alternately applied to the first element 14 (or suspended mass "M" of the vehicle) or to the second element 15 (or non suspended mass "m" of such vehicle) .

Thus, the function f (t) identified in [1] is a function capable of discriminating between high and low frequency, that is, if f (t) >0 we are in the high frequency field while if f(t)<0 we are in the low frequency field.

In the practice, function f(t) allows discriminating whether an element of suspension 12 exhibits a behaviour in high or low frequency, that is, function f(t) is alternately applicable to the first 14 or to the second element 15, if the first 14 or the second element 15 exhibit high or low frequency dynamics.

Thus, the elements of suspension 12 exhibit a high frequency behaviour if the frequency value is higher than the invariance frequency value $\alpha$ (see Figure 1 and 2), or they exhibit a low frequency behaviour if the frequency value is lower than the invariance frequency value $\alpha$ (see Figure 1 and 2).

To select the constant $\alpha$ in a controllable suspension capable of alternately working at high or low damping (that is, respectively $c_{max}$ or $c_{min}$) it is worth noting that a working frequency typical of the suspension exists wherein it is unimportant if the adjustable force generator 13 is controlled to operate at a high or low damping coefficient.

In other words, even if a damping coefficient $c_{max}$ or $c_{min}$ is selected, the behaviour of the controllable suspension 12 does not change.

Such frequency is called invariance frequency and imposing such frequency value in function f(t) identified in [1], the value of the invariance frequency of the controllable suspension 12 is obtained.

The value of constant $\alpha$ can be calculated by the function described hereinafter:

$$\alpha \;=\; \sqrt{2k/M}$$

that is, $\sqrt{2}$ times the resonance of the suspended mass M, k being the suspension stiffness.

Typical values for the example being discussed, that is, a semi-active suspension in relation to the specific automotive industry field, identify as a possible range of values for the constant $\alpha$ that comprised between 1.5 and 2.5 Hz, preferably 1.8 Hz (see figure 1 and figure 2).

It is worth noting that if reference is made to a semi-active suspension in relation to the specific motorcycle industry field, the possible range of values for the constant would be that comprised between 1.5 and 5 Hz, preferably 4 Hz.

Advantageously, in the preferred embodiment of the present invention, the first damping law L1 to be applied to the adjustable force generator 13 can be equal to a first damping coefficient and the second damping law L2, to be applied to the adjustable force generator 13, can be equal to a second damping coefficient.

In other words, the control means 20 are suitable for generating the control signal $S_{in}$ wherein law L1 coincides with a first damping coefficient or wherein law L2 coincides with a second damping coefficient when the following relationship occurs:

- if the value of the ratio of $z(\ddot{t})^2/z(\dot{t})^2$ is less than $\alpha^2$ the controllable force generator 13 is imposed the first damping law L1, which can coincide with said first damping coefficient which in particular is the maximum damping coefficient $c_{max}$.
- if the value of the ratio of $z(\ddot{t})^2/z(\dot{t})^2$ is more than $\alpha^2$ the controllable force generator 13 is imposed the second damping law L2, which can coincide with said second damping coefficient which in particular is the minimum damping coefficient $c_{min}$.

It should be noted that the damping coefficients $c_{max}$ or $c_{min}$, imposed to the adjustable force generator 13, as specific values of the control laws L1 and L2, respectively, are selected by the manufacturer in the design step of suspension 12, where $c_{min}$ must be the lowest (if possible at the technical limits imposed by the type of suspension) and $c_{max}$ must be sufficient to dampen the stresses induced by the profile of road 18 on suspension 12.

In particular, such damping coefficients $c_{max}$ or $C_{min}$ are selected both in relation to the specific type of vehicle suspension 12 is intended for and for the target suspension 12 is designed for, that is, a driving comfort or grip target.

Moreover, it is worth noting that in order to implement the control method of the controllable force generator 13 in the embodiments illustrated in figure 4 and 5, it is necessary to control the dynamics of the controllable suspension 12 at predetermined time intervals T.

For example, an interval T must be less than or equal to 1/2F, where F is the maximum frequency to be controlled.

The suspension control method 12 must therefore select every T if imposing a low damping coefficient or a high damping coefficient to the controllable force generator 13.

In other words, the control method comprises the following steps:

- detecting the first signal S1 representative of the acceleration ($\ddot{z}(t)$) of the first element 14 of the suspended mass "M";
- detecting a second signal S2 representative of the speed ($\dot{z}(t)$) of the first element 14 of the suspended mass "M";
- determining the ratio value between said first signal S1 squared and said second signal S2 squared; and
- applying a damping control signal $S_{in}$ to the controllable force generator 13 based on the value to be thus discriminated if the components of suspension 12 exhibit a high or low frequency dynamics.

In particular, the damping control signal $S_{in}$ envisages that:

- if the value of the ratio between said first signal S1 squared and said second signal S2 squared (that is, the ratio of

$z(\ddot{t})^2/z(\dot{t})^2$) is less than $\alpha^2$ then impose the first damping law L1, so as to apply the maximum damping coefficient $c_{max}$;
- if the value of the ratio between said first signal S1 squared and said second signal S2 squared (that is, the ratio of $z(\ddot{t})^2/z(\dot{t})^2$) is more than $\alpha^2$ then the controllable force generator 13 is imposed the second damping law L2, so as to apply the minimum coefficient $c_{min}$.

As described above, the control method may be implemented by detecting the speed and the acceleration of the second element 15, that is, of the non suspended mass "m", that is, the damping laws identified above L1 and L2 can be alternately applied to the first element 14 (or suspended mass "M" of the vehicle) or to the second element 15 (or non suspended mass "m" of such vehicle).

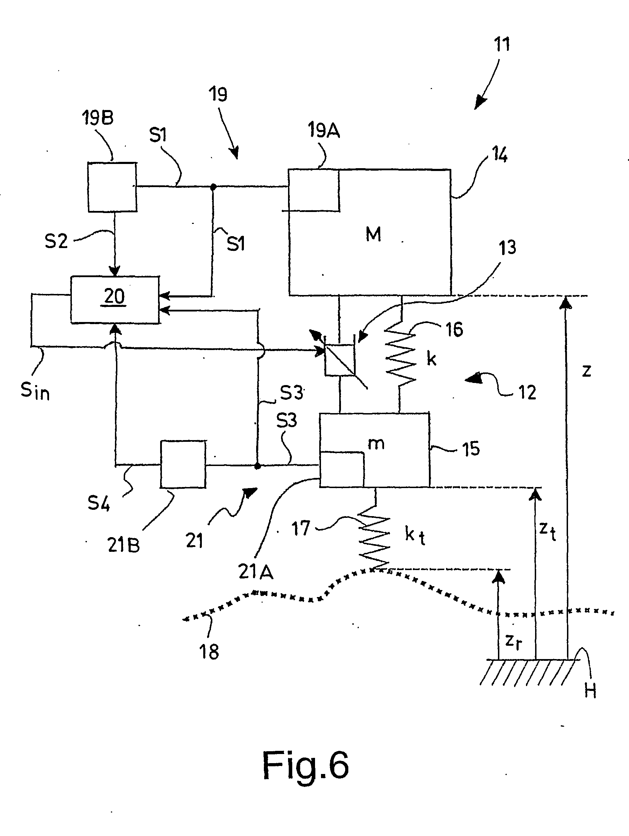

Advantageously, it is possible to improve the performance of the control method illustrated above, resorting to the embodiment of the control apparatus 11 illustrated in figure 6.

With reference now in particular to figure 6, it is noted that the control apparatus 11 further comprises detecting means 21 for detecting suitable physical quantities so as to generate a third S3 and a fourth signal S4 representative of said physical quantities.

The detection means 21 may for example detect physical quantities such as speed, acceleration and the like induced on suspension 12 when the vehicle (not shown in the annexed figures) covers the road profile 18.

In particular, the third signal S3 may represent the acceleration that said second element 15 undergoes while the vehicle covers the profile of said road 18 and the fourth signal S4 may represent the speed of said second element 15 while the vehicle covers the profile of said road 18.

In other words, signal S3 can be identified with the second derivative of the movement $z_t$ while signal S4 can be identified with the first derivative of the movement $z_t$, that is:

- signal S3 can be identified with $\ddot{z}_t(t)$, that is, the second derivative of movement $z_t$; and

- signal S4 can be identified with $(\dot{z}_t(t)$, that is, the first derivative of movement $z_t$.

Advantageously, in the embodiment shown in figure 6, the control means 20 is suitable for receiving, besides the first signal S1 and the second signal S2, also said third S3 and fourth S4 signal.

The second detection means 21 is an accelerometer 21A operatively associated to said second element 15, suitable for detecting the acceleration of said second element 15 and for generating said third signal S3 (that is, the second derivative of movement $z_t$, that is, $\ddot{z}_t(t)$) and an integration device 21B suitable for carrying out the operation of integration of said third signal S3 for obtaining signal S4 (that is, the first derivative of movement $z_t$, that is, $\dot{z}_t(t)$) representative of the speed of said second element 15.

Advantageously, the control means 20 are therefore suitable for generating the control signal $S_{in}$ for controlling said controllable force generator 13.

To this end, the control means 20 is suitable for generating said control signal $S_{in}$ that must be applied to said controllable force generator 13 based on the following conditions:

- if the ratio value $z(\ddot{t})^2/z(\dot{t})^2$ is less than $\alpha^2$, the control signal $S_{in}$ must satisfy the control law commonly known as Sky-Hook; whereas
- if the ratio value $z(\ddot{t})^2/z(\dot{t})^2$ is more than $\alpha^2$, the control signal $S_{in}$ must satisfy the control law commonly known as Acceleration-Driven-Damping (ADD)

The damping laws that control the control logic Sky-Hook and · Acceleration-Driven-Damping (ADD) are shown hereinbelow:

$$\texttt{Sky-Hook (2 stages):} \qquad S_{in}(t) = c_{MAX} \Rightarrow \dot{z}(\dot{z}-\dot{z}_t) \geq 0 \quad [4]$$

$$S_{in}(t) = c_{MIN} \Rightarrow \dot{z}(\dot{z} - \dot{z}_t) < 0 \quad [5]$$

ADD (2 stages): $$S_{in}(t) = c_{MAX} \Rightarrow \ddot{z}(\dot{z} - \dot{z}_t) \geq 0 \quad [6]$$

$$S_{in}(t) = c_{MIN} \Rightarrow \ddot{z}(\dot{z} - \dot{z}_t) < 0 \quad [7]$$

where

$\ddot{z}(t)$ is the acceleration expressed in m/s of said first element 14 of the controllable suspension 12 measured at time t;

$\dot{z}(t)$ is the speed expressed in m/s of said first element 14 of the controllable suspension 12 measured at time t;

$\dot{z}_t(t)$ is the vertical speed expressed in m/s of the second element 15 of the controllable suspension 12 calculated at time t;

$S_{in}(t)$ is the control signal to be imposed to the controllable force generator 13 on the basis of the occurrence of the above conditions.

In other words, the control means 20 are suitable for imposing the control law Sky-Hook to the controllable force generator 13 for ratio values $z(\dot{t})^2/z(\ddot{t})^2$ less than $\alpha^2$ and the control law Acceleration-Driven-Damping for ratio values $z(\ddot{t})^2/z(\dot{t})^2$ more than $\alpha^2$.

More in particular, the control signal $S_{in}$ can change the damping coefficient of the controllable force generator 13 in accordance with said first damping law L1 or with said second damping law L2 when the following conditions occur:

- imposing the first damping law L1, that is, damping coefficient $c_{max}$ if the condition according to which function f(t) indicated in [1] is less than or equal to zero is satisfied and if the condition of the control logic of the SkyHook law indicated in [4], that is, $\ddot{z}^2 - \alpha^2 \dot{z}^2 \leq 0$ and $\dot{z}(\dot{z} - \dot{z}_t) \geq 0$ is satisfied,
  or if the condition according to which function f(t) indicated in [1] is more than zero is satisfied and if the condition of the control logic of the Acceleration-Driven-Damping law indicated in [6], that is, $\ddot{z}^2 - \alpha^2 \dot{z}^2 > 0$ and $\ddot{z}(\dot{z} - \dot{z}_t) \geq 0$ is satisfied;
- imposing the second damping law L2, that is, damping coefficient $c_{min}$ if the condition according to which function f(t) indicated in [1] is less than or equal to zero is satisfied and if the condition of the control logic of the SkyHook law indicated in [5], that is, $\ddot{z}^2 - \alpha^2 \dot{z}^2 \leq 0$ and $\dot{z}(\dot{z} - \dot{z}_t) \leq 0$ is satisfied,
  or if the condition according to which function f(t) indicated in [1] is more than zero is satisfied and if the condition of the control logic of the Acceleration-Driven-Damping law indicated in [7], that is, $\ddot{z}^2 - \alpha^2 \dot{z}^2 > 0$ and $\ddot{z}(\dot{z} - \dot{z}_t) < 0$ is satisfied;

where $\alpha$ is constant (identifiable with the invariance frequency) expressed in rad/sec, that is, the constant that represents the frequency suitable for discriminating the set of frequencies between high and low frequencies, said constant a being equal to the value that can be calculated by the formula illustrated above, that is $\alpha = \sqrt{2k/M}$ (see figure 1 and figure 2).

Advantageously, in order to implement the control method of the controllable force generator 13 in the embodiment illustrated in figure 6, it is necessary to control the dynamics of the controllable suspension 12 at a predetermined time interval T.

For example, an interval T must be less than or equal to 1/2F, where F is the maximum frequency to be controlled.

The suspension control method 12 must therefore be selected every T if imposing a low damping coefficient or a high damping coefficient to the controllable force generator 13.

In other words, the control method in relation to the specific embodiment illustrated in figure 6, besides the steps described above with reference to the control method of the embodiments illustrated in figure 4 and 5, also comprises the following further steps:

- detecting the third signal S3 representative of the acceleration of said second element 15, that is, S3 is identifiable with $\ddot{z}_t(t)$ ;
- detecting the fourth signal S4 representative of the speed of said second element (15), that is, S4 is identifiable with $\dot{z}_t(t)$;
- imposing the first damping law L1, that is, damping coefficient $c_{max}$ if:

$\ddot{z}^2 - \alpha^2 \dot{z}^2 \leq 0$ (that is, function f(t) indicated in [1]) and $\dot{z}(\dot{z} - \dot{z}_t) \geq 0$ (that is, the control logic SkyHook indicated in [4]) or $\ddot{z}^2 - \alpha^2 \dot{z}^2 > 0$ (that is, function f (t) indicated in [1]) and $\ddot{z}(\dot{z} - \dot{z}_t) \geq 0$ (that is, the control logic ADD indicated in [6]) :

- imposing the first second damping L2, that is, damping coefficient $c_{min}$ if:

$\ddot{z}^2 - \alpha^2\dot{z}^2 \leq 0$ (that is, function f(t) indicated in [1]) and $\dot{z}(\dot{z}-\dot{z}_t) < 0$ (that is, the control logic SkyHook indicated in [5]) or $\ddot{z}^2 - \alpha^2\dot{z}^2 > 0$ (that is, function f (t) indicated in [1]) and $\ddot{z}(\dot{z}-\dot{z}_t) < 0$ (that is, the control logic ADD indicated in [7]).

It is worth noting that the controllable force generator 13 is a controllable shock absorber of the type described above with reference to the prior art, that is, CDC (Continuously Damping Control) shock absorbers, rheological shock absorbers.

Finally, it is worth noting that the control means 20 are an E.C.U. normally available on the market.

With reference now to figure 8, a first profile 22 is noted, depicting the result that can be obtained with the embodiment of the control apparatus illustrated in figures 4 and 5, and a second profile 23 depicting the result that can be obtained with the embodiment of the control apparatus illustrated in figure 6 and a third profile 24 depicting the theoretical optimum but not implementable from a semi-active suspension.

As is seen in this figure, profile 22, obtained by the control apparatus described with reference to figures 4 and 5, allows achieving satisfactory results even if slightly degraded compared to profile 23.

Of course, a man skilled in the art may make several changes and adjustments to the configurations described above in order to meet specific and incidental needs, all falling within the scope of protection defined in the following claims.

## Claims

1. Method for controlling a controllable force generator (13) in a controllable suspension system (12), said controllable suspension system (12) being interconnected between a first element (14, 15) and a second element (15, 14), said method comprising the steps of:

   - detecting a first signal (S1) representative of the acceleration ($\ddot{z}(t)$) of said first element (14, 15);
   - detecting a second signal (S2) representative of the speed ($\dot{z}(t)$) of said first element (14, 15) ; the method is **characterized by**:
   - determining the ratio value between said first signal (S1) squared and said second signal (S2) squared; and
   - applying a control signal ($S_{in}$) to said controllable force generator (13) based on the value of said ratio between said first signal (S1) squared and said second signal (S2) squared, so as to discriminate if said controllable suspension system (12) exhibits a high or low frequency dynamics.

2. Method according to claim 1, wherein said step of applying a damping control law ($S_{in}$) to said controllable force generator (13) comprises the further steps of:

   - applying a first damping law (L1, L2) to said controllable force generator (13) if the ratio value between said first signal (S1) squared and said second signal (S2) squared is less than or equal to a predetermined constant ($\alpha$) squared, that is, $z(\ddot{t})^2/z(\dot{t})^2 < \alpha^2$ or
   - applying a second damping law (L1, L2) to said controllable force generator if the ratio value between said first signal (S1) squared and said second signal (S2) squared is more than said predetermined constant ($\alpha$) squared, that is, $z(\ddot{t})^2/z(\dot{t})^2) > \alpha^2$.

3. Method according to claim 2, wherein said step of applying a first damping law (L1, L2) to said controllable force generator (13) comprises the step of imposing a first damping coefficient ($c_{max}$, $c_{min}$) to said controllable force generator (13).

4. Method according to claim 2 or 3, wherein said step of applying a second damping law (L1, L2) comprises the step of imposing a second damping coefficient ($c_{min}$, $c_{max}$) to said controllable force generator (13).

5. Method according to claims 1 to 4, comprising the further step of repeating the steps of detecting said first and second signal (S1, S2), determining the value of the ratio between said first signal (S1) squared and said second signal (S2) squared and applying a control signal ($S_{in}$) to said controllable force generator (13) according to the value of said ratio between said first signal (S1) squared at predetermined time intervals (T).

6. Method according to claims 1 and 2, comprising the further steps of:

   - detecting a third signal (S3) representative of the acceleration of said second element (14, 15), that is, $\ddot{z}_t(t)$ ;

- detecting a fourth signal (S4) representative of the speed of said second element (14, 15), that is, $\dot{z}_t(t)$.

7. Method according to claim 6, wherein said step of applying a control signal ($S_{in}$) comprises the step of imposing a first damping law (L1, L2) if:

$$\ddot{z}^2 - \alpha^2 \dot{z}^2 \le 0 \quad \text{and} \quad \dot{z}(\dot{z} - \dot{z}_t) \ge 0$$

or

$$\ddot{z}^2 - \alpha^2 \dot{z}^2 > 0 \quad \text{and} \quad \ddot{z}(\dot{z} - \dot{z}_t) > 0$$

where
$\ddot{z}$ is the acceleration of said first element (14, 15);
$\dot{z}$ is the speed of said first element (14, 15);
$\dot{z}_t$ is the speed of said second element (14, 15);
$\alpha$ is the invariance frequency.

8. Method according to claim 7, wherein said first damping law (L1, L2) envisages imposing a first damping coefficient ($c_{min}$, $c_{max}$) to said controllable force generator (13).

9. Method according to claims 6 to 8, wherein said step of applying a control signal ($S_{in}$) comprises the step of imposing a second damping law (L1, L2) if:

$$\ddot{z}^2 - \alpha^2 \dot{z}^2 \le 0 \quad \text{and} \quad \dot{z}(\dot{z} - \dot{z}_t) \le 0$$

or

$$\ddot{z}^2 - \alpha^2 \dot{z}^2 > 0 \quad \text{and} \quad \ddot{z}(\dot{z} - \dot{z}_t) \le 0$$

where
$\ddot{z}$ is the acceleration of said first element (14, 15);
$\dot{z}$ is the speed of said first element (14, 15);
$\dot{z}_t$ is the speed of said second element (14, 15);
$\alpha$ is the invariance frequency.

10. Method according to claim 9, wherein said second damping law (L1, L2) envisages imposing a second damping coefficient ($c_{min}$, $c_{max}$) to said controllable force generator (13) .

11. Method according to claims 6 to 10, comprising the further step of repeating the steps of detecting said third and fourth signal (S3, S4) and of applying a control signal ($S_{in}$) to said controllable force generator (13) at predetermined time intervals (T).

12. Method according to claims 2 to 11, wherein said predetermined constant ($\alpha$) is the invariance frequency, said predetermined constant being equal to $\alpha = \sqrt{2k/M}$ .

13. Method according to claims 2 to 12, wherein said first damping coefficient ($c_{min}$, $c_{max}$) is a stiff damping coefficient whose value is predetermined, said second damping coefficient ($c_{min}$, $c_{max}$) is a soft damping coefficient whose value is predetermined.

**14.** Control apparatus (11) for controlling a controllable force generator (13) in a controllable suspension system (12), said controllable suspension system (12) being interconnected between a first element (14, 15) and a second element (14, 15), said control apparatus comprising:

   - first detection means (19) for detecting a first signal (S1) representative of the acceleration ($\ddot{z}(t)$) of said first element (14, 15) and a second signal (S2) representative of the speed ($\dot{z}(t)$) of said first element (14; 15);
   - control means (20) suitable for receiving said first signal (S1) and said second signal (S2) ;

   **characterised in that** said control means (20) is adapted for generating a control signal ($S_{in}$) for controlling said controllable force generator (13), said control signal ($S_{in}$) being generated according to the value of the ratio between said first signal (S1) squared and said second signal (S2) squared, so as to discriminate if said controllable suspension system (12) exhibits a high or low frequency dynamics.

**15.** Control apparatus according to claim 14, **characterised in that** said control means (20) are suitable for generating said control signal ($S_{in}$) based on a first damping law (L1,L2) if the ratio value between said first signal (S1) squared and said second signal squared (S2) is less than or equal to a predetermined constant ($\alpha$) squared, or based on a second damping law (L1, L2) if the ratio value between said first signal (S1) squared and said second signal (S2) squared is more than a predetermined constant ($\alpha$) squared.

**16.** Control apparatus according to claim 15, **characterised in that** said first law (L1, L2) is equal to a first damping coefficient ($c_{max}$, $c_{min}$) and said second damping law (L1, L2) is equal to a second damping coefficient ($c_{min}$, $c_{max}$).

**17.** Apparatus according to claims 14 to 16, wherein said first detection means (19) comprise an accelerometer (19A) operatively associated to said first element (14, 15), suitable for detecting the acceleration ($\ddot{z}(t)$) of said first element (14, 15) and for generating said first signal (S1) and an integration device (19B) suitable for carrying out the integration operation of said first signal (S1) for obtaining said signal (S2) representative of the speed ($\dot{z}(t)$) of said first element (14, 15).

**18.** Control apparatus according to claim 14 and 15, **characterised in that** it comprises second detection means (21) for detecting a third signal (S3) representative of the acceleration of said second element (14, 15) that is, $\ddot{z}_t(t)$ and a fourth signal (S4) representative of the speed of said second element (14, 15), that is, $\dot{z}_t(t)$.

**19.** Control apparatus according to claim 18, **characterised in that** said control means (20) are suitable for receiving said third signal (S3) and said fourth signal (S4) for generating said control signal ($S_{in}$) based on a first damping law (L1, L2) if:

$$\ddot{z}^2 - \alpha^2 \dot{z}^2 \leq 0 \quad \text{and} \quad \dot{z}(\dot{z} - \dot{z}_t) \geq 0$$

or

$$\ddot{z}^2 - \alpha^2 \dot{z}^2 > 0 \quad \text{and} \quad \ddot{z}(\dot{z} - \dot{z}_t) > 0$$

where
$\ddot{z}$ is the acceleration of said first element (14, 15);
$\dot{z}$ is the speed of said first element (14, 15);
$\dot{z}_t$ is the speed of said second element (14, 15);
$\alpha$ is the invariance frequency.

**20.** Control apparatus according to claim 19, wherein said first damping law (L1, L2) envisages imposing a first damping coefficient ($c_{min}$, $c_{max}$) to said controllable force generator (13).

**21.** Control apparatus according to claims 19 to 20, **characterised in that** said control means (20) are suitable for receiving said third signal (S3) and said fourth signal (S4) for generating said control signal ($S_{in}$) based on a second damping law (L1, L2) if:

$$\ddot{z}^2 - \alpha^2 \dot{z}^2 \le 0 \quad \text{and} \quad \dot{z}(\dot{z} - \dot{z}_t) \le 0$$

or

$$\ddot{z}^2 - \alpha^2 \dot{z}^2 > 0 \quad \text{and} \quad \ddot{z}(\dot{z} - \dot{z}_t) \le 0$$

where
$\ddot{z}$ is the acceleration of said first element (14, 15) ;
$\dot{z}$ is the speed of said first element (14, 15) ;
$\dot{z}_t$ is the speed of said second element (14, 15);
$\alpha$ is the invariance frequency.

22. Control apparatus according to claim 21, wherein said second damping law (L1, L2) envisages imposing a second damping coefficient ($c_{min}$, $c_{max}$) to said controllable force generator (13) .

23. Control apparatus according to claims 18 to 22, wherein said second detection means (21) comprise an accelerometer (21A) operatively associated to said second element (14, 15), suitable for detecting the acceleration ($\ddot{z}_t(t)$) of said second element (14, 15) and for generating said third signal (S3) and an integration device (21B) suitable for carrying out the integration operation of said third signal (S3) for obtaining said signal (S4) representative of the speed ($\dot{z}_t(t)$) of said second element (14, 15).

24. Control apparatus according to claims 14 to 23, wherein said first damping coefficient ($c_{min}$, $c_{max}$) is a stiff damping coefficient whose value is predetermined, said second damping coefficient ($c_{min}$, $c_{max}$) is a soft damping coefficient whose value is predetermined.

**Patentansprüche**

1. Verfahren zum Steuern eines steuerbaren Kraftgenerators (13) in einem steuerbaren Aufhängungssystem (12), wobei das steuerbare Aufhängungssystem (12) zwischen einem ersten Element (14, 15) und einem zweiten Element (15, 14) verbunden ist, wobei das Verfahren die Schritte umfasst, dass:

   - ein erstes Signal (S 1) detektiert wird, das die Beschleunigung ($\ddot{z}(t)$) des ersten Elements (14, 15) darstellt;
   - ein zweites Signal (S2) detektiert wird, das die Geschwindigkeit ($\dot{z}(t)$) des ersten Elements (14, 15) darstellt;
   wobei das Verfahren **dadurch gekennzeichnet ist, dass**:
   - der Verhältniswert zwischen dem ersten Signal (S1) im Quadrat und dem zweiten Signal (S2) im Quadrat ermittelt wird; und
   - ein Steuerungssignal ($S_{in}$) auf den steuerbaren Kraftgenerator (13) auf der Grundlage des Werts des Verhältnisses zwischen dem ersten Signal (S1) im Quadrat und dem zweiten Signal (S2) im Quadrat angewendet wird, um zu unterscheiden, ob das steuerbare Aufhängungssystem (12) eine Dynamik mit hoher oder niedriger Frequenz zeigt.

2. Verfahren nach Anspruch 1,
   wobei der Schritt des Anwendens eines Dämpfungssteuerungsgesetzes ($S_{in}$) auf den steuerbaren Kraftgenerator (13) die weiteren Schritte umfasst, dass:

   - ein erstes Dämpfungsgesetz (L1, L2) auf den steuerbaren Kraftgenerator (13) angewendet wird, wenn der Verhältniswert zwischen dem ersten Signal (S1) im Quadrat und dem zweiten Signal (S2) im Quadrat kleiner oder gleich einer vorbestimmten Konstante ($\alpha$) im Quadrat ist, das heißt $z(\ddot{t})^2/ z(\dot{t})^2 < \alpha^2$ oder
   - ein zweites Dämpfungsgesetz (L1, L2) auf den steuerbaren Kraftgenerator angewendet wird, wenn der Verhältniswert zwischen dem ersten Signal (S1) im Quadrat und dem zweiten Signal (S2) im Quadrat größer als

die vorbestimmte Konstante ($\alpha$) im Quadrat ist, das heißt, $z(\ddot{t})^2/z(\dot{t})^2 > \alpha^2$.

3. Verfahren nach Anspruch 2,
wobei der Schritt des Anwendens eines ersten Dämpfungsgesetzes (L1, L2) auf den steuerbaren Kraftgenerator (13) den Schritt umfasst, dass ein erster Dämpfungskoeffizient ($c_{max}$, $c_{min}$) für den steuerbaren Kraftgenerator (13) eingeführt wird.

4. Verfahren nach Anspruch 2 oder 3,
wobei der Schritt des Anwendens eines zweiten Dämpfungsgesetzes (L1, L2) den Schritt umfasst, dass ein zweiter Dämpfungskoeffizient ($c_{min}$, $c_{max}$) für den steuerbaren Kraftgenerator (13) eingeführt wird.

5. Verfahren nach Anspruch 1 bis 4,
das den weiteren Schritt umfasst, dass die Schritte des Detektierens des ersten und zweiten Signals (S1, S2), des Ermittelns des Werts des Verhältnisses zwischen dem ersten Signal (S1) im Quadrat und dem zweiten Signal (S2) im Quadrat und des Anwendens eines Steuerungssignals ($S_{in}$) auf den steuerbaren Kraftgenerator (13) gemäß dem Wert des Verhältnisses zwischen dem ersten Signal (S1) im Quadrat in vorbestimmten Zeitintervallen (T) wiederholt werden.

6. Verfahren nach Anspruch 1 und 2, das die weiteren Schritte umfasst, dass:

   - ein drittes Signal (S3) detektiert wird, das die Beschleunigung des zweiten Elements (14, 15), das heißt $\ddot{z}_t$ (t), darstellt;
   - ein viertes Signal (S4) detektiert wird, das die Geschwindigkeit des zweiten Elements (14, 15), das heißt $\dot{z}_t$ (t) darstellt.

7. Verfahren nach Anspruch 6,
wobei der Schritt des Anwendens eines Steuerungssignals ($S_{in}$) den Schritt umfasst, dass ein erstes Dämpfungsgesetz (L1, L2) eingeführt wird, wenn:

$$\ddot{z}^2 - \alpha^2 \dot{z}^2 \leq 0 \text{ und } \dot{z}(\dot{z} - \dot{z}_t) \geq 0$$

oder

$$\ddot{z}^2 - \alpha^2 \dot{z}^2 > 0 \text{ und } \ddot{z}(\dot{z} - \dot{z}_t) > 0$$

wobei
$\ddot{z}$ die Beschleunigung des ersten Elements (14, 15) ist;
$\dot{z}$ die Geschwindigkeit des ersten Elements (14, 15) ist;
$\dot{z}_t$ die Geschwindigkeit des zweiten Elements (14, 15) ist;
$\alpha$ die Invarianzfrequenz ist.

8. Verfahren nach Anspruch 7, wobei das erste Dämpfungsgesetz (L1, L2) vorsieht, dass ein erster Dämpfungskoeffizient ($c_{min}$, $c_{max}$) für den steuerbaren Kraftgenerator (13) eingeführt wird.

9. Verfahren nach Anspruch 6 bis 8,
wobei der Schritt des Anwendens eines Steuerungssignals ($S_{in}$) den Schritt umfasst, dass ein zweites Dämpfungsgesetz (L1, L2) eingeführt wird, wenn:

$$\ddot{z}^2 - \alpha^2 \dot{z}^2 \leq 0 \text{ und } \dot{z}(\dot{z} - \dot{z}_t) \leq 0$$

oder

$$\ddot{z}^2 - \alpha^2 \dot{z}^2 > 0 \text{ und } \ddot{z}(\dot{z} - \dot{z}_t) \leq 0$$

wobei
$\ddot{z}$ die Beschleunigung des ersten Elements (14, 15) ist;
$\dot{z}$ die Geschwindigkeit des ersten Elements (14, 15) ist;
$\dot{z}_t$ die Geschwindigkeit des zweiten Elements (14, 15) ist;
$\alpha$ die Invarianzfrequenz ist.

10. Verfahren nach Anspruch 9,
wobei das zweite Dämpfungsgesetz (L1, L2) vorsieht, dass ein zweiter Dämpfungskoeffizient ($c_{min}$, $c_{max}$) für den steuerbaren Kraftgenerator (13) eingeführt wird.

11. Verfahren nach Anspruch 6 bis 10,
das den weiteren Schritt umfasst, dass die Schritte des Detektierens des dritten und vierten Signals (S3, S4) und des Anwendens eines Steuerungssignals ($S_{in}$) auf den steuerbaren Kraftgenerator (13) in vorbestimmten Zeitintervallen (T) wiederholt werden.

12. Verfahren nach Anspruch 2 bis 11,
wobei die vorbestimmte Konstante ($\alpha$) die Invarianzfrequenz ist, wobei die vorbestimmte Konstante gleich

$$\alpha = \sqrt{2k/M} \text{ ist.}$$

13. Verfahren nach Anspruch 2 bis 12,
wobei der erste Dämpfungskoeffizient ($c_{min}$, $c_{max}$) ein steifer Dämpfungskoeffizient ist, dessen Wert vorbestimmt ist, und der zweite Dämpfungskoeffizient ($c_{min}$, $c_{max}$) ein weicher Dämpfungskoeffizient ist, dessen Wert vorbestimmt ist.

14. Steuerungsvorrichtung (11) zum Steuern eines steuerbaren Kraftgenerators (13) in einem steuerbaren Aufhängungssystem (12), wobei das steuerbare Aufhängungssystem (12) zwischen einem ersten Element (14, 15) und einem zweiten Element (14, 15) verbunden ist,
wobei die Steuerungsvorrichtung umfasst:

- erste Detektionsmittel (19) zum Detektieren eines ersten Signals (S1), das die Beschleunigung ($\ddot{z}(t)$) des ersten Elements (14, 15) darstellt, und eines zweiten Signals (S2), das die Geschwindigkeit ($\dot{z}(t)$) des ersten Elements (14, 15) darstellt;
- Steuerungsmittel (20), die zum Empfangen des ersten Signals (S1) und des zweiten Signals (S2) geeignet sind;
**dadurch gekennzeichnet, dass** die Steuerungsmittel (20) zum Erzeugen eines Steuerungssignals ($S_{in}$) zum Steuern des steuerbaren Kraftgenerators (13) ausgelegt sind, wobei das Steuerungssignal ($S_{in}$) gemäß dem Wert des Verhältnisses zwischen dem ersten Signal (S1) im Quadrat und dem zweiten Signal (S2) im Quadrat erzeugt wird, um zu unterscheiden, ob das steuerbare Aufhängungssystem (12) eine Dynamik mit hoher oder niedriger Frequenz zeigt.

15. Steuerungsvorrichtung nach Anspruch 14,
**dadurch gekennzeichnet, dass** die Steuerungsmittel (20) zum Erzeugen des Steuerungssignals ($S_{in}$) auf der Grundlage eines ersten Dämpfungsgesetzes (L1, L2), wenn der Verhältniswert zwischen dem ersten Signal (S 1) im Quadrat und dem zweiten Signal (S2) im Quadrat kleiner oder gleich einer vorbestimmten Konstante ($\alpha$) im Quadrat ist, oder auf der Grundlage eines zweiten Dämpfungsgesetzes (L1, L2) geeignet sind, wenn der Verhältniswert zwischen dem ersten Signal (S 1) im Quadrat und dem zweiten Signal (S2) im Quadrat größer als eine vorbestimmte Konstante ($\alpha$) im Quadrat ist.

16. Steuerungsvorrichtung nach Anspruch 15,
**dadurch gekennzeichnet, dass** das erste Gesetz (L1, L2) gleich einem ersten Dämpfungskoeffizienten ($c_{max}$, $c_{min}$) ist und das zweite Dämpfungsgesetz (L1, L2) gleich einem zweiten Dämpfungskoeffizienten ($c_{min}$, $c_{max}$) ist.

17. Vorrichtung nach Anspruch 14 bis 16,

wobei die ersten Detektionsmittel (19) einen Beschleunigungsmesser (19A), der mit dem ersten Element (14, 15) funktional verbunden ist und zum Detektieren der Beschleunigung ($\ddot{z}$ (t)) des ersten Elements (14, 15) und zum Erzeugen des ersten Signals (S1) geeignet ist, und eine Integrationseinrichtung (19B) umfassen, die zum Ausführen der Integrationsoperation des ersten Signals (S1) geeignet ist, um das Signal (S2) zu beschaffen, welches die Geschwindigkeit ($\dot{z}$ (t)) des ersten Elements (14, 15) darstellt.

18. Steuerungsvorrichtung nach Anspruch 14 und 15,
**dadurch gekennzeichnet, dass** sie zweite Detektionsmittel (21) zum Detektieren eines dritten Signals (S3), das die Beschleunigung des zweiten Elements (14, 15), das heißt $\ddot{z}_t$ (t) darstellt, und eines vierten Signals (S4) umfasst, das die Geschwindigkeit des zweiten Elements (14, 15), das heißt $\dot{z}_t$ (t), darstellt.

19. Steuerungsvorrichtung nach Anspruch 18,
**dadurch gekennzeichnet, dass** die Steuerungsmittel (20) zum Empfangen des dritten Signals (S3) und des vierten Signals (S4) geeignet sind, um das Steuerungssignal ($S_{in}$) auf der Grundlage eines ersten Dämpfungsgesetzes (L1, L2) zu erzeugen, wenn: $\ddot{z}^2 - \alpha^2\dot{z}^2 \leq 0$ und $\dot{z}(\dot{z} - \dot{z}_t) \geq 0$ oder

$$\ddot{z}^2 - \alpha^2\dot{z}^2 > 0 \ \text{und} \ \ddot{z}(\dot{z} - \dot{z}_t) > 0$$

wobei
$\ddot{z}$ die Beschleunigung des ersten Elements (14, 15) ist;
$\dot{z}$ die Geschwindigkeit des ersten Elements (14, 15) ist;
$\dot{z}_t$ die Geschwindigkeit des zweiten Elements (14, 15) ist;
$\alpha$ die Invarianzfrequenz ist.

20. Steuerungsvorrichtung nach Anspruch 19, wobei das erste Dämpfungsgesetz (L1, L2) vorsieht, dass ein erster Dämpfungskoeffizient ($c_{min}$, $c_{max}$) für den steuerbaren Kraftgenerator (13) eingeführt wird.

21. Steuerungsvorrichtung nach Anspruch 19 bis 20,
**dadurch gekennzeichnet, dass** die Steuerungsmittel (20) zum Empfangen des dritten Signals (S3) und des vierten Signals (S4) geeignet sind, um das Steuerungssignal ($S_{in}$) auf der Grundlage eines zweiten Dämpfungsgesetzes (L1, L2) zu erzeugen, wenn:

$$\ddot{z}^2 - \alpha^2\dot{z}^2 \leq 0 \ \text{und} \ \dot{z}(\dot{z} - \dot{z}_t) \leq 0$$

oder

$$\ddot{z}^2 - \alpha^2\dot{z}^2 > 0 \ \text{und} \ \ddot{z}(\dot{z} - \dot{z}_t) \leq 0$$

wobei
$\ddot{z}$ die Beschleunigung des ersten Elements (14, 15) ist;
$\dot{z}$ die Geschwindigkeit des ersten Elements (14, 15) ist;
$\dot{z}_t$ die Geschwindigkeit des zweiten Elements (14, 15) ist;
$\alpha$ die Invarianzfrequenz ist.

22. Steuerungsvorrichtung nach Anspruch 21,
wobei das zweite Dämpfungsgesetz (L1, L2) vorsieht, dass ein zweiter Dämpfungskoeffizient ($c_{min}$, $c_{max}$) für den steuerbaren Kraftgenerator (13) eingeführt wird.

23. Steuerungsvorrichtung nach Anspruch 18 bis 22,
wobei die zweiten Detektionsmittel (21) einen Beschleunigungsmesser (21A), der mit dem zweiten Element (14, 15) funktional verbunden ist und zum Detektieren der Beschleunigung ($\ddot{z}_t$ (t)) des zweiten Elements (14, 15) und zum Erzeugen des dritten Signals (S3) geeignet ist, und eine Integrationseinrichtung (21 B) umfassen, die zum Ausführen der Integrationsoperation des dritten Signals (S3) geeignet ist, um das Signal (S4) zu beschaffen, das die Geschwindigkeit ($\dot{z}_t$ (t)) des zweiten Elements (14, 15) darstellt.

24. Steuerungsvorrichtung nach Anspruch 14 bis 23, wobei der erste Dämpfungskoeffizient ($c_{min}$, $c_{max}$) ein steifer Dämpfungskoeffizient ist, dessen Wert vorbestimmt ist, und der zweite Dämpfungskoeffizient ($c_{min}$, $c_{max}$) ein weicher Dämpfungskoeffizient ist, dessen Wert vorbestimmt ist.

**Revendications**

1. Procédé de commande d'un générateur de force contrôlable (13) dans un système de suspension contrôlable (12), ledit système de suspension contrôlable (12) étant interconnecté entre un premier élément (14, 15) et un second élément (15, 14), ledit procédé comprenant les étapes consistant à :

   - détecter un premier signal (S1) représentatif de l'accélération ($\ddot{z}(t)$) dudit premier élément (14, 15) ;
   - détecter un deuxième signal (S2) représentatif de la vitesse ($\dot{z}(t)$) dudit premier élément (14, 15) ;
   le procédé étant **caractérisé par** :
   - la détermination de la valeur du rapport entre le carré dudit premier signal (S1) et le carré dudit deuxième signal (S2) ; et
   - l'application d'un signal de commande ($S_{in}$) audit générateur de force contrôlable (13) en se basant sur la valeur dudit rapport entre le carré dudit premier signal (S1) et le carré dudit deuxième signal (S2), afin de différencier si ledit système de suspension contrôlable (12) présente une dynamique à haute ou basse fréquence.

2. Procédé selon la revendication 1, dans lequel ladite étape d'application d'une loi de commande d'amortissement ($S_{in}$) audit générateur de force contrôlable (13) comprend les étapes complémentaires consistant à :

   - appliquer une première loi d'amortissement (L1, L2) audit générateur de force contrôlable (13) si la valeur du rapport entre le carré dudit premier signal (S1) et le carré dudit deuxième signal (S2) est inférieure ou égale au carré d'une constante prédéterminée ($\alpha$), c'est-à-dire, $z(\ddot{t})^2/z(\dot{t})^2 < \alpha^2$, ou
   - appliquer une seconde loi d'amortissement (L1, L2) audit générateur de force contrôlable si la valeur du rapport entre le carré dudit premier signal (S1) et le carré dudit deuxième signal (S2) est supérieure au carré de ladite constante prédéterminée ($\alpha$), c'est-à-dire, $z(\ddot{t})^2 / z(\dot{t})^2 > \alpha^2$.

3. Procédé selon la revendication 2, dans lequel ladite étape d'application d'une première loi d'amortissement (L1, L2) audit générateur de force contrôlable (13) comprend l'étape consistant à imposer un premier coefficient d'amortissement ($c_{max}$, $c_{min}$) audit générateur de force contrôlable (13).

4. Procédé selon la revendication 2 ou 3, dans lequel ladite étape d'application d'une seconde loi d'amortissement (L1, L2) comprend l'étape consistant à imposer un second coefficient d'amortissement ($c_{mim}$, $c_{max}$) audit générateur de force contrôlable (13).

5. Procédé selon les revendications 1 à 4, comprenant l'étape complémentaire consistant à répéter les étapes de détection desdits premier et deuxième signaux (S1, S2), de détermination de la valeur du rapport entre le carré dudit premier signal (S1) et le carré dudit deuxième signal (S2) et d'application d'un signal de commande ($S_{in}$) audit générateur de force contrôlable (13) en fonction de la valeur dudit rapport entre le carré dudit premier signal (S1) à des intervalles de temps prédéterminés (T).

6. Procédé selon les revendications 1 et 2, comprenant les étapes complémentaires consistant à :

   - détecter un troisième signal (S3) représentatif de l'accélération dudit second élément (14, 15), c'est-à-dire, $\ddot{z}_1(\dot{t})$ ;
   - détecter un quatrième signal (S4) représentatif de la vitesse dudit second élément (14, 15), c'est-à-dire, $\dot{z}_1(t)$.

7. Procédé selon la revendication 6, dans lequel ladite étape d'application d'un signal de commande ($S_{in}$) comprend l'étape consistant à imposer une première loi d'amortissement (L1, L2) si :

$$\ddot{z}^2 - \hat{\alpha}^2 \dot{z}^2 \leq 0 \;\; \text{et} \;\; \dot{z}(\dot{z} - \dot{z}_1) \geq 0$$

ou

$$\ddot{z}^2 - \alpha^2 \dot{z}^2 > 0 \;\; \text{et} \;\; \ddot{z}(\dot{z} - \dot{z}_1) > 0$$

ou
où
$\ddot{z}$ est l'accélération dudit premier élément (14, 15) ;
$\dot{z}$ est la vitesse dudit premier élément (14, 15) ;
$\dot{z}_1$ est la vitesse dudit second élément (14, 15) ;
$\alpha$ est la fréquence d'invariance.

8. Procédé selon la revendication 7, dans lequel ladite première loi d'amortissement (L1, L2) prévoit d'imposer un premier coefficient d'amortissement ($c_{mim}$, $c_{max}$) audit générateur de force contrôlable (13).

9. Procédé selon les revendications 6 à 8, dans lequel ladite étape d'application d'un signal de commande ($S_{in}$) comprend l'étape consistant à imposer une seconde loi d'amortissement (L1, L2) si :

$$\ddot{z}^2 - \alpha^2 \dot{z}^2 \leq 0 \;\; \text{et} \;\; \dot{z}(\dot{z} - \dot{z}_1) \leq 0$$

ou

$$\ddot{z}^2 - \alpha^2 \dot{z}^2 > 0 \;\; \text{et} \;\; \ddot{z}(\dot{z} - \dot{z}_1) \leq 0$$

où
$\ddot{z}$ est l'accélération dudit premier élément (14, 15) ;
$\dot{z}$ est la vitesse dudit premier élément (14, 15) ;
$\dot{z}_1$ est la vitesse dudit second élément (14, 15) ;
$\alpha$ est la fréquence d'invariance.

10. Procédé selon la revendication 9, dans lequel ladite seconde loi d'amortissement (L1, L2) prévoit d'imposer un second coefficient d'amortissement ($c_{mim}$, $c_{max}$) audit générateur de force contrôlable (13).

11. Procédé selon les revendications 6 à 10, comprenant l'étape complémentaire consistant à répéter les étapes de détection desdits troisième et quatrième signaux (S3, S4) et à appliquer un signal de commande ($S_{in}$) audit générateur de force contrôlable (13) à intervalles de temps prédéterminés (T).

12. Procédé selon les revendications 2 à 11, dans lequel ladite constante prédéterminée ($\alpha$) est la fréquence d'invariance, ladite constante prédéterminée étant égale à $\alpha = \sqrt{2k/M}$ .

13. Procédé selon les revendications 2 à 12, dans lequel ledit premier coefficient d'amortissement ($c_{mim}$, $c_{max}$) est un coefficient d'amortissement ferme dont la valeur est prédéterminée, ledit second coefficient d'amortissement ($c_{mim}$, $c_{max}$) est un coefficient d'amortissement souple dont la valeur est prédéterminée.

14. Dispositif de commande (11) pour commander un générateur de force contrôlable (13) dans un système de suspension contrôlable (12), ledit système de suspension contrôlable (12) étant interconnecté entre un premier élément (14, 15) et un second élément (14, 15), ledit dispositif de commande comprenant :

   - un premier moyen de détection (19) pour détecter un premier signal (S1) représentatif de l'accélération ($\ddot{z}(t)$) dudit premier élément (14, 15) et un deuxième signal (S2) représentatif de la vitesse ($\dot{z}(t)$) dudit premier élément (14, 15) ;

- un moyen de commande (20) adapté à recevoir ledit premier signal (S1) et ledit deuxième signal (S2) ;
**caractérisé en ce que** ledit moyen de commande (20) est adapté à générer un signal de commande ($S_{in}$) pour commander ledit générateur de force contrôlable (13), ledit signal de commande ($S_{in}$) étant généré en fonction de la valeur du rapport entre le carré dudit premier signal (S1) et le carré dudit deuxième signal (S2), afin de différencier si ledit système de suspension contrôlable (12) présente une dynamique à haute ou basse fréquence.

**15.** Dispositif de commande selon la revendication 14, **caractérisé en ce que** ledit moyen de commande (20) est adapté à générer ledit signal de commande ($S_{in}$) en se basant sur une première loi d'amortissement (L1, L2) si la valeur du rapport entre le carré dudit premier signal (S1) et le carré dudit deuxième signal (S2) est inférieure ou égale au carré d'une constante prédéterminée ($\alpha$) ou en se basant sur une seconde loi d'amortissement (L1, L2) si la valeur du rapport entre le carré dudit premier signal (S1) et le carré dudit deuxième signal (S2) est supérieure au carré d'une constante prédéterminée ($\alpha$).

**16.** Dispositif de commande selon la revendication 15, **caractérisé en ce que** ladite première loi (L1, L2) est égale à un premier coefficient d'amortissement ($c_{max}$, $c_{min}$) et ladite seconde loi d'amortissement (L1, L2) est égale à un second coefficient d'amortissement ($c_{mim}$, $c_{max}$).

**17.** Dispositif selon les revendications 14 à 16, dans lequel ledit premier moyen de détection (19) comprend un accéléromètre (19A) associé fonctionnellement audit premier élément (14, 15), adapté à détecter l'accélération ($\ddot{z}(t)$) dudit premier élément (14, 15) et à générer ledit premier signal (S1) et un dispositif d'intégration (19B) adapté à effectuer l'opération d'intégration dudit premier signal (S1) pour obtenir ledit signal (S2) représentatif de la vitesse ($\dot{z}(t)$) dudit premier élément (14, 15).

**18.** Dispositif de commande selon les revendications 14 et 15, **caractérisé en ce qu'**il comprend un second moyen de détection (21) pour détecter un troisième signal (S3) représentatif de l'accélération dudit second élément (14, 15), c'est-à-dire, $\ddot{z}_1(t)$, et un quatrième signal (S4) représentatif de la vitesse dudit second élément (14, 15), c'est-à-dire, $\dot{z}_1(t)$.

**19.** Dispositif de commande selon la revendication 18, **caractérisé en ce que** ledit moyen de commande (20) est adapté à recevoir ledit troisième signal (S3) et ledit quatrième signal (S4) pour générer ledit signal de commande ($S_{in}$) en se basant sur une première loi d'amortissement (L1, L2) si :

$$\ddot{z}^2 - \alpha^2 \dot{z}^2 \leq 0 \ \text{ et } \ \dot{z}(\dot{z} - \dot{z}_1) \geq 0$$

ou

$$\ddot{z}^2 - \alpha^2 \dot{z}^2 > 0 \ \text{ et } \ \ddot{z}(\dot{z} - \dot{z}_1) > 0$$

où
$\ddot{z}$ est l'accélération dudit premier élément (14, 15) ;
$\dot{z}$ est la vitesse dudit premier élément (14, 15) ;
$\dot{z}_1$ est la vitesse dudit second élément (14, 15) ;
$\alpha$ est la fréquence d'invariance.

**20.** Dispositif de commande selon la revendication 19, dans lequel ladite première loi d'amortissement (L1, L2) prévoit d'imposer un premier coefficient d'amortissement ($c_{min}$, $c_{max}$) audit générateur de force contrôlable (13).

**21.** Dispositif de commande selon les revendications 19 à 20, **caractérisé en ce que** ledit moyen de commande (20) est adapté à recevoir ledit troisième signal (S3) et ledit quatrième signal (S4) pour générer ledit signal de commande ($S_{in}$) en se basant sur une seconde loi d'amortissement (L1, L2) si :

$$\ddot{z}^2 - \alpha^2 \dot{z}^2 \leq 0 \ \text{ et } \ \dot{z}(\dot{z} - \dot{z}_1) \leq 0$$

ou

$$\ddot{z}^2 - \alpha^2 \dot{z}^2 > 0 \ \text{ et } \ \ddot{z}\left(\dot{z} - \dot{z}_1\right) \le 0$$

où
$\ddot{z}$ est l'accélération dudit premier élément (14, 15) ;
$\dot{z}$ est la vitesse dudit premier élément (14, 15) ;
$\dot{z}_1$ est la vitesse dudit second élément (14, 15) ;
$\alpha$ est la fréquence d'invariance.

**22.** Dispositif de commande selon la revendication 21, dans lequel ladite seconde loi d'amortissement (L1, L2) prévoit d'imposer un second coefficient d'amortissement ($c_{mim}$ $c_{max}$) audit générateur de force contrôlable (13).

**23.** Dispositif de commande selon les revendications 18 à 22, dans lequel ledit second moyen de détection (21) comprend un accéléromètre (21A) associé fonctionnellement audit second élément (14, 15), adapté à détecter l'accélération ($\ddot{z}(t)$) dudit second élément (14, 15) et à générer ledit troisième signal (S3) et un dispositif d'intégration (21B) adapté à effectuer l'opération d'intégration dudit troisième signal (S3) pour obtenir ledit signal (S4) représentatif de la vitesse ($\dot{z}_1(t)$) dudit second élément (14, 15).

**24.** Dispositif de commande selon les revendications 14 à 23, dans lequel ledit premier coefficient d'amortissement ($c_{mim}$, $c_{max}$) est un coefficient d'amortissement ferme dont la valeur est prédéterminée, ledit second coefficient d'amortissement ($c_{mim}$, $c_{max}$) est un coefficient d'amortissement souple dont la valeur est prédéterminée.

Fig.1

EP 2 040 944 B1

Fig.2

Fig.3

Fig.4

Fig.5

Fig.6

Fig.7

26

**EP 2 040 944 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6904344 B
- US 6311110 B
- US 6115658 A
- US 5732370 A
- US 5088760 A
- US 5062657 A